# EUROPÄISCHE PATENTSCHRIFT

(11) **EP 1 115 552 B1**
(45) Veröffentlichungstag und Bekanntmachung des Hinweises auf die Patenterteilung: **02.05.2003**
(21) Anmeldenummer: 99944117.3
(22) Anmeldetag: 26.08.1999
(51) Int. Cl.: B29C 49/24, C08L 23/10, B32B 27/32, G09F 3/04

(54) **ETIKETT AUS POLYOLEFINFOLIE**
IN-MOULD LABEL FILM FOR BLOW-MOULDING, METHOD FOR PRODUCING SAME AND ITS USE
ETIQUETTE CONSTITUEE D'UN FILM DE POLYOLEFINE

(30) Priorität: 27.08.1998 GB 9818560; 08.07.1999 DE 19931722
(43) Veröffentlichungstag der Anmeldung: 18.07.2001
(73) Patentinhaber: Trespaphan GmbH, 66539 Neunkirchen (DE)
(72) Erfinder: BIDDISCOMBE, Helen, Bridgwater, Somerset TA6 6SN (GB); SCHAAN, Josef, D-66822 Lebach (DE); WIENERS, Gerhard, D-60320 Frankfurt am Main (DE)
(74) Vertreter: Luderschmidt, Schüler & Partner GbR
(86) Internationale Anmeldenummer: EP9906271
(87) Internationale Veröffentlichungsnummer: WO00012287

(56) Entgegenhaltungen:
- US-A- 5 492 757
- US-A- 5 498 474

## Beschreibung

Die vorliegende Erfindung betrifft die Verwendung einer opaken Folie als In-Mould-Etikett für das Blasformen.

Folien aus thermoplastischen Kunststoffen werden in jüngster Zeit vermehrt zur Etikettierung von Behältnissen verwendet. Im Stand der Technik sind verschiedene Verfahren zur Etikettierung bekannt. Die Folien, die für eine derartige Verwendung geeignet sind, müssen ein ausgewähltes Eigenschaftsprofil aufweisen. Hierbei erfordern unterschiedliche Etikettierungsprozesse unterschiedliche Folieneigenschaften. Dies bedeutet, daß sehr häufig nicht nur eine einzige gute Eigenschaften die Verwendung der Folie für den vorgesehenen Zweck ermöglicht. Vielmehr gewährleistet erst eine Vielzahl von Eigenschaften, die gleichzeitig an einer Folie realisiert werden müssen, die Verwendbarkeit für den vorgesehenen Zweck.

Ein bekanntes Verfahren ist die In-Mould-Etikettierung beim Blasformen von Behältern aus Kunststoff. Hierbei wird ein Schlauch eines geeigneten Polymeren kontinuierlich oder diskontinuierlich extrudiert. Der Schlauch wird in eine mehrteilige Hohlform eingelegt, dabei am unteren Ende abgequetscht und am oberen Ende abgeschnitten. In die verbleibende obere Öffnung fährt eine Düse formschlüssig ein, durch die beim eigentlichen Blasvorgang Luft eingeblasen wird. Dabei wird der extrudierte Schlauch aufgeblasen und formschlüssig an die Wandung der Hohlform angelegt. Danach wird die Form geöffnet, oben und unten werden überstehende Schlauchrest des ausgeformten Hohlkörper entfernt und der Vorgang von neuem gestartet.

Die Etikettierung bei der Herstellung von Behältern mittels Blasformen ist im Stand der Technik bekannt und wird als In-Mould Etikettierung bezeichnet. Hierbei wird, meist von einem Roboter, ein Etikett so in die geöffnete Blasform eingelegt, daß die bedruckte Außenseite des Etiketts an der Formwand anliegt und die unbedruckte Innenseite dem zu formenden Hohlkörper zugewendet ist. Beim Zuführen der schlauchförmigen Schmelze und Ausformen des Hohlkörpers durch den Luftdruck schmiegt sich die noch plastische Oberfläche der Kunststoffmasse innig an das Etikett an und verbindet sich mit ihm zu einem etikettierten Behältnis.

Bei diesem Etikettierprozeß muß dafür gesorgt werden, daß das Etikett glatt und faltenfrei an der Formwand anliegt. Dies erfolgt entweder mittels Vakuum, das an feine Entlüftungsbohrungen in der Weise angelegt wird, daß die Bohrungen dabei vom Etikett weitgehend verschlossen werden, oder mittels elektrostatischer Kräfte zwischen dem elektrostatisch geladenen Etikett und der geerdeten Form.

Bei einfachen Etikettenformen, wird das Etikett in Rollenform zugeführt und direkt an der Blasformmaschine zugeschnitten ("Cut in place"). Bei komplexeren Umrissen wird das Etikett vorab und abseits der Blasformmaschine zugeschnitten, gestapelt, an der Blasformmaschine vom Stapel vereinzelt (Cut & Stack-Verfahren) und einzeln in die Blasform eingelegt.

Die Aufgabe der vorliegenden Erfindung bestand darin, eine kostengünstige Etikettenfolie zur Verfügung zu stellen, welche für die In-Mould-Etikettierung im Blasform-Verfahren geeignet sein soll. Dabei soll die Folie bei ihrer Verwendung zur In-Mould Etikettierung ein optisch einwandfreies gut haftendes Etikett ergeben und die Folie muß im Prozeß problemlos zu verarbeiten sein.

Diese Aufgabe wird gelöst durch die Verwendung einer opaken mehrschichtigen Polypropylenfolie als In-Mould - Etikett im Blasform-Verfahren. Die Folie weist eine Basisschicht und mindesten zwei Deckschichten auf, wobei die Basisschicht vakuoleninitierende Füllstoffe enthält, und die Folie insgesamt eine Dicke von mindestens 85µm aufweist und die Basisschicht eine Kombination aus tertiärem aliphatischen Amin und Fettsäureamid enthält. Beide Deckschichten enthalten Antiblockmittel und die Dichte der Folie liegt in einem Bereich von 0,65 bis 0,85 g/cm³ und die Folie ist auf beiden Oberflächen Corona- oder Flamm-behandelt.

Es wurde gefunden, daß die spezielle Additivrezepturierung der opaken Folie in Verbindung mit der Foliendicke, und der ausgewählten Dichte und der beidseitigen Oberflächenbehandlung, deren Verwendbarkeit für den erfindungsgemäßen Zweck gewährleistet.

"Opake Folie" bedeutet im Sinne der vorliegenden Erfindung eine undurchsichtige Folie, deren Lichtdurchlässigkeit (ASTM-D 1003-77) höchstens 70 %, vorzugsweise höchstens 50 %, beträgt.

Die opake Basisschicht der Mehrschichtfolie enthält im wesentlichen ein Polyolefin, vorzugsweise ein Propylenpolymer, und opak machende Füllstoffe sowie die angegebenen Additive in jeweils wirksamen Mengen. Im allgemeinen enthält die Basisschicht mindestens 50 Gew.-%, vorzugsweise 60 bis 99 Gew.-%, insbesondere 70 bis 98 Gew.-%, des Polyolefins, jeweils bezogen auf das Gewicht der Schicht.

Als Polyolefine sind Propylenpolymere bevorzugt. Diese Propylenpolymeren enthalten 90 bis 100 Gew.-%, vorzugsweise 95 bis 100 Gew.-%, insbesondere 98 bis 100 Gew.-%, Propyleneinheiten und besitzen einen Schmelzpunkt von 120°C oder höher, vorzugsweise 150 bis 170°C, und im allgemeinen einen Schmelzflußindex von 0,5 bis 8 g/10 min, vorzugsweise 2 bis 5 g/10 min, bei 230°C und einer Kraft von 21,6 N (DIN 53735). Isotaktisches Propylenhomopolymer mit einem ataktischen Anteil von 15 Gew.-% und weniger, Copolymere von Ethylen und Propylen mit einem Ethylengehalt von 5 Gew.-% oder weniger, Copolymere von Propylen mit C₄-C₈-Olefinen mit einem Olefingehalt von 5 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die Basisschicht dar, wobei isotaktisches Propylenhomopolymer besonders bevorzugt ist. Die angegebenen Gewichtsprozente beziehen sich auf das jeweilige Polymere.

Des weiteren ist eine Mischung aus den genannten Propylenhomo- und/oder -copolymeren und/oder -terpolymeren und anderen Polyolefinen, insbesondere aus Monomeren mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind Polyethylene, insbesondere HDPE, LDPE, VLDPE und LLDPE, wobei der Anteil dieser Polyolefine jeweils 15 Gew.-%, bezogen auf die Polymermischung, nicht übersteigt.

Die opake Basisschicht der Folie enthält Füllstoffe in einer Menge von maximal 40 Gew.-%, vorzugsweise 1 bis 30 Gew.-%, insbesondere 2 bis 20 Gew.-%, bezogen auf das Gewicht der opaken Schicht. Füllstoffe sind im Sinne der vorliegenden Erfindung Pigmente und/oder vakuoleniniziierende Teilchen.

Pigmente sind im Sinne der vorliegenden Erfindung unverträgliche Teilchen, die im wesentlichen nicht zur Vakuolenbildung beim Verstrecken der Folie führen. Die färbende Wirkung der Pigmente wird durch die Teilchen selbst verursacht. Der Begriff "Pigmente" ist im allgemeinen an einen mittleren Teilchendurchmesser im Bereich von 0,01 bis maximal 1 µm gebunden und umfaßt sowohl sogenannte "Weißpigmente", welche die Folien weiß einfärben, als auch "Buntpigmente", welche der Folie eine bunte oder schwarze Farbe verleihen. Im allgemeinen liegt der mittlere Teilchendurchmesser der Pigmente im Bereich von 0,01 bis 1 µm, vorzugsweise 0,01 bis 0,7 µm, insbesondere 0,01 bis 0,4 µm.

Übliche Pigmente sind Materialien wie z.B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden.

Die Titandioxidteilchen bestehen im allgemeinen zu mindestens 95 Gew.-% aus Rutil und werden bevorzugt mit einem Überzug aus anorganischen Oxiden und/oder aus organische Verbindungen mit polaren und unpolaren Gruppen eingesetzt. Derartige Beschichtungen des TiO2 sind im Stand der Technik bekannt.

Im Sinne der vorliegenden Erfindung sind "vakuoleniniziierende Füllstoffe" feste Teilchen die mit der Polymermatrix unverträglich sind und beim Verstrecken der Folien zur Bildung von vakuolenartigen Hohlräumen führen, wobei Größe, Art und Anzahl der Vakuolen von der Größe der festen Teilchen und den Streckbedingungen wie Streckverhältnis und Strecktemperatur abhängig sind. Die Vakuolen reduzieren die Dichte und geben den Folien ein charakteristisches perlmuttartiges, opakes Aussehen, welches durch Lichtstreuung an den Grenzflächen "Vakuole/Polymermatrix" entsteht. Die Lichtstreuung an den festen Teilchen selbst trägt zur Opazität der Folie im allgemeinen vergleichsweise wenig bei. In der Regel haben die vakuoleniniziierenden Füllstoffe eine Mindestgröße von 1 µm , um zu einer effektiven, d.h. opak machenden Menge an Vakuolen zu führen. Im allgemeinen beträgt der mittlere Teilchendurchmesser der Teilchen 1 bis 6 µm, vorzugsweise 1,5 bis 5 µm. Der chemische Charakter der Teilchen spielt eine untergeordnete Rolle.

Übliche vakuoleniniziierende Füllstoffe sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum) und Siliciumdioxid, worunter Calciumcarbonat und Siliciumdioxid bevorzugt eingesetzt werden. Als organische Füllstoffe kommen die üblicherweise verwendeten, mit dem Polymeren der Basisschicht unverträglichen Polymeren in Frage, insbesondere solche wie HDPE, Copolymere von cyclischen Olefinen wie Norbornen oder Tetracyclododecen mit Ethylen oder Propen (COC) wie in EP-A-O 623 463 beschrieben, Polyester, Polystyrole, Polyamide, halogenierte organische Polymere, wobei Polyester wie beispielsweise Polybutylenterephthalate und Cycloolefincopolymere bevorzugt sind. "Unverträgliche Materialien bzw. unverträgliche Polymere" im Sinne der vorliegenden Erfindung bedeutet, daß das Material bzw. das Polymere in der Folie als separates Teilchen bzw. als separate Phase vorliegt.

Die Basisschicht enthält vorzugsweise Pigmente in einer Menge von 0,5 bis 10 Gew.-%, vorzugsweise 1 bis 8 Gew.-%, insbesondere 1 bis 5 Gew.-%. Vakuoleniniziierende Füllstoffe sind bevorzugt in einer Menge von 0,5 bis-25 Gew.-%, vorzugsweise 1 bis 15 Gew.-%, insbesondere 1 bis 10 Gew.-% enthalten. Die Angaben beziehen sich auf das Gewicht der Basisschicht.

Die vakuoleninitierenden Füllstoffe reduzieren die Dichte der Folie. Es wurde gefunden, daß die Dichte der Folie in engen Grenzen gehalten werden muß, um die gute Verwendbarkeit der Folie als Blasform-In-Mould-Etikett zu gewährleisten. Die Dichte der Folie muß in einem Bereich von 0,65 bis 0,85 g/cm³ liegen. Folien mit einer Dichte von kleiner 0,65 g/cm³ zeigen bei der Verwendung als Blasform-ln-Mould-Etikett optische Störungen, meist in Form der sogenannten Orangenhaut. Dabei deformiert sich die Etikettenfolie oberflächlich unter Ausbildung millimetergroßer Bläschen, die zu einem optisch nicht akzeptablen Erscheinungsbild führen. Liegt die Dichte über 0,85 g/cm³, wird die Haftung zum Behältnis schlecht. Die schlechte Haftung bei einer Foliendichte von über 0,85 g/cm³ könnte damit zusammenhängen, daß die Etikettenfolie mit nur geringfügig reduzierter Dichte oberflächlich zu unnachgiebig ist und sich nicht ausreichend innig an den sich bildenden Hohlkörper anschmiegt. Es ist daher erfidungswesentlich, daß die Dichte in einem Bereich von 0,65 bis 0,85 g/cm³ liegt, vorzugsweise, von 0,7 bis 0,8 g/cm³.

Weiterhin ist die Gesamtdicke der Folie erfindungswesentlich und beträgt mindestens 85 µm , vorzugsweise 87 bis 120µm, insbesondere 90 bis 100µm . Es wurde gefunden, daß Folien, mit einer Gesamtdicke von unter 85 µm nicht als In-Mould-Etikett im Blasform-Verfahren eingesetzt werden können, da sich bei Verwendung von Folien die dünner als 85µm sind, zwischen Etikett und Hohlkörper größere Blasen bilden, die häufig prall gefüllt oder aufgeblasen erscheinen. Diese werden vermutlich dadurch verursacht, daß zwischen dem sich bildenden Hohlkörper und dem Etikett Luft eingeschlossen und unter dem ansteigenden Blasdruck auf einer sich verengenden Fläche komprimiert wird. Nach der Entnahme des noch warmen Hohlkörpers dehnt sich die eingeschlossene Luft unter Aufwölbung des Etiketts noch weiter aus.

Die erfindungsgemäße Folie umfaßt neben der opaken Basisschicht beidseitig Deckschichten. Deckschichten sind im Sinne der vorliegenden Erfindung außenliegende Schichten, deren äußere Oberfläche die Folienoberfläche bildet.

Die Deckschicht der Mehrschichtfolie enthält im allgemeinen mindestens 70 Gew.-%, vorzugsweise 75 bis <100 Gew.-%, insbesondere 90 bis 98 Gew.-%, eines Propylenpolymeren und Antiblockmittel und gegebenenfalls weitere übliche Additive wie Stabilisatoren und/oder Gleitmittel, z.B. Fettsäureamide in jeweils wirksamen Mengen. Bevorzugt sind Ausführungsformen der Deckschichten, die zusätzlich Fettsäureamide enthalten. Die vorstehenden Angaben in Gew.-% beziehen sich auf das Gewicht der Deckschicht.

Das Propylenpolymere der Deckschicht ist vorzugsweise ein Copolymer aus Propylen und Ethylen oder Propylen und Butylen oder Propylen und einem anderen Olefin mit 5 bis 10 Kohlenstoffatomen. Für die Zwecke der Erfindung sind auch Terpolymere von Ethylen und Propylen und Butylen oder Ethylen und Propylen und einem anderen Olefin mit 5 bis 10 Kohlenstoffatomen geeignet. Weiterhin können Mischungen oder Blends aus zwei oder mehreren der genannten Co- und Terpolymeren eingesetzt werden.

Für die Deckschicht sind Ethylen-Propylen-Copolymere und Ethylen-Propylen-Butylen-Terpolymere bevorzugt, insbesondere statistische Ethylen-Propylen-Copolymere mit einem Ethylengehalt von 2 bis 10 Gew.-%, bevorzugt 5 bis 8 Gew.-%, oder statistische Ethylen-Propylen-Butylen-1-Terpolymere mit einem Ethylengehalt von 1 bis 10 Gew.-%, bevorzugt 2 bis 6 Gew.-%, und einem Butylen-1-Gehalt von 3 bis 20 Gew.-%, bevorzugt 8 bis 10 Gew.-%, jeweils bezogen auf das Gewicht des Co- oder Terpolymeren.

Die vorstehend beschriebenen Co- und Terpolymeren weisen im allgemeinen einen Schmelzflußindex von 1,5 bis 30 g/10 min, vorzugsweise von 3 bis 15g/10 min, auf. Der Schmelzpunkt liegt im Bereich von 120 bis 140°C. Das vorstehend beschriebene Blend aus Co- und Terpolymeren hat einen Schmelzflußindex von 5 bis 9 g/10 min und einen Schmelzpunkt von 120 bis 150°C. Alle vorstehend angegebenen Schmelzflußindices werden bei 230°C und einer Kraft von 21,6 N (DIN 53735) gemessen.

Die erfindungsgemäße Folie ist mindestens dreischichtig und umfaßt als wesentliche coextrudierte Schichten immer die opake Basisschicht sowie beidseitig mindestens je eine Deckschicht. Gegebenenfalls sind auch vier- und fünfschichtige Ausführungsformen möglich, bei welchen die opake Schicht die Basisschicht der Folie bildet und ein- oder beidseitig auf den Oberflächen der Basisschicht eine Zwischenschicht aufgebracht ist.

Die Dicke der Deckschichten liegt bevorzugt im Bereich von 0,5 bis 5µm , insbesondere 1,5 bis 3 µm , vorzugsweise 2 bis 3µm. Im Rahmen der vorliegenden Erfindung hat sich gezeigt, daß vergleichsweise dicke Deckschichten vorteilhaft für die Folienoptik sind, insbesondere für die Qualität des Druckbildes auf der bedruckten äußeren Seite der Etikettenfolie. Dabei wurde gefunden, daß für opake Basisschichten mit einer Schichtdicke von bis zu 70 µm die Deckschichtdicke vergleichsweise unkritisch ist. Es hat sich gezeigt, daß mit sehr dicken opaken Basisschichten von über 80 µm eine gleichmäßige Optik besonders schwierig zu erzielen ist. Dieses Problem konnte gelöst werden, indem die dicke opake Basisschicht mit besonders dicken Deckschichten von über 1,5 µm versehen wird. Ferner ergaben sich Vorteile bzgl. der Haftung des Etiketts auf dem Hohlkörper, wenn die Schichtdicke der inneren Deckschicht, d.h. die dem Hohlkörper zugewendete Seite, über 1,0 µm, bevorzugt über 1,5 µm beträgt. Schließlich ergab sich eine besonders gute Planlage bei der Verarbeitung der Folie (Drucken, Stapeln und Vereinzeln), wenn die Deckschichten auf beiden Seiten gleich oder nahezu gleich dick sind.

Nach dem Stand der Technik werden boPP-Folien häufig auf einer Seite Coronaoder Flamm-behandelt, um aufzutragende Druckfarben, Metallschichten oder Adhäsive zu verankern. Die gegenüberliegende Seite bleibt üblicherweise unbehandelt. Es wurde gefunden, daß sich die erfindungsgemäße In-Mould-Etikettenfolie bei der Verwendung nach dem Cut & Stack-Verfahren besonders einfach und zuverlässig vereinzeln läßt, wenn die Folie einer beidseitigen Coronaoder Flamm-Vorbehandlung unterworfen wird.

Erfindungsgemäß enthält die Basisschicht tertäres aliphatisches Amin in einer Menge von 0,02 bis 0,3 Gew.-%, vorzugsweise 0,05 bis 0,2 Gew.-% und Fettsäureamide in einer Menge von 0,04 bis 0,4 Gew.-% , vorzugsweise 0,07 bis 0,25 Gew.-% und gegebenenfalls Glycerinmonostearat in einer Menge von 0,05 bis 0,4 Gew.-%, vorzugsweise 0,10 bis 0,25 Gew.-%.

Tertiäre aliphatische Amine umfassen Verbindungen der allgemeinen Formel R₃N, worin R einen Fettsäurerest oder einen C₁₂-C₁₈-Alkylrest oder einen hydroxysubstituierten Alkylrest bedeutet, wobei die Reste R gleich oder verschieden sein können. Hydroxy-substituierte Alkylreste sind bevorzugt Hydroxyethyl-, Hydroxypropyl- oder Hydroxybutylreste. Besonders bevorzugt sind N,N-bis(2-hydroxyethyl)-alkylamine. Technisch kommen häufig Gemische unterschiedlich substituierter tertiärer aliphatischer Amine zum Einsatz, die auch um Oxyalkyliden-Gruppen verlängerte Hydroxyalkylketten enthalten können. Darüber hinaus können auch N,N-bis-Hydroxyalkyl-fettsäurester zum Einsatz kommen.

Als Carbonsäureamide sind Amide einer wasserlöslichen Carbonsäure mit 8 bis 24 C-Atomen oder Mischungen dieser Amide umfaßt. Insbesondere sind Erucasäureamid, Ölsäureamid, Stearinsäureamid und ähnliche bevorzugt.

Als Glycerinmonostearate kommen gegebenefalls Stoffgemische in Betracht, die neben dem Stearylrest auch weitere Fettsäurereste enthalten können und sich bzgl. des Substitutionsmusters am Glycerinrest unterscheiden. Besonders vorteilhaft sind Gemische mit einem hohen Anteil an alpha-Glycerinmonostearat.

Im Rahmen der vorliegenden Erfindung wurde festgestellt, daß Folien mit einer Dicke von über 85 µm und einer Dichte von 0,65 bis 0,85 g/cm³ und der beschriebenen Additivrezepturierung auch ohne erhöhten Schrumpf blasenfrei zu verarbeiten sind und keine Orangenhaut aufweisen. Es ist daher bevorzugt, daß die Folie Schrumpfwerte von < 4 % in beiden Richtungen aufweist. Vorzugsweise beträgt der Schrumpf 0,5 bis 3 %, insbesondere 1-2 % in beide Richtungen. Die Schrumpfwerte werden bestimmt nach dem OPMA-Schrumpftest nach dem die Folie in einem Ofen 10 Minuten bei einer Temperatur von 130° gehalten wird.

Um bestimmte Eigenschaften der erfindungsgemäßen Polypropylenfolie für die Herstellung und die Verarbeitung der Folie sowie für den Gebrauchseinsatz einzustellen / zu verbessern, können sowohl die Basisschicht als auch die Deckschichten weitere Zusätze in einer jeweils wirksamen Menge enthalten, vorzugsweise Stabilisatoren und/oder Neutralisationsmittel, die mit den Polymeren der Basisschicht und der Deckschicht/en verträglich sind.

Neutralisationsmittel sind vorzugsweise Calciumstearat und/oder Calciumcarbonat einer mittleren Teilchengröße von höchstens 0,7 µm , einer absoluten Teilchengröße von kleiner 10 µm und einer spezifischen Oberfläche von mindestens 40 m²/g. Auch andere Neutralisationsmittel wie DHT 4A haben sich bewährt.

Als Stabilisatoren können die üblichen stabilisierend wirkenden Verbindungen für Ethylen-, Propylen- und andere Olefinpolymere eingesetzt werden. Deren Zusatzmenge liegt zwischen 0,05 und 2 Gew.-%. Besonders geeignet sind phenolische Stabilisatoren, auch in Kombination mit phosphitischen Costabilisatoren, Alkali-/Erdalkalistearate und/oder Alkali/-Erdalkalicarbonate. Phenolische Stabilisatoren werden in einer Menge von 0,1 bis 0,6 Gew.-%, insbesondere 0,15 bis 0,3 Gew.-%, in Kombination mit phosphitische Costabilisatoren, wie diese selbst, in einer Menge von 0,04 bis 0,2, insbesondere 0,05 bis 0,15 % eingesetzt. Bevorzugt werden solche Stabilisatoren und Costabilisatoren, die eine Molmasse von mehr als 500 g/mol aufweisen. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol, ggf. in Kombination mit (*Ultranox 626 oder Irgafos 168) sind besonders vorteilhaft.

Erfindungsgemäß werden den Deckschichten Antiblockmittel und vorzugsweise auch Fettsäureamid zugesetzt. Die wirksame Menge an Antiblockmittel liegt im Bereich von 0,05 bis 2 Gew.-%, vorzugsweise 0,15 bis 0,6 Gew.-%. Fettsäureamide können in der Deckschicht in einer Menge von 0,05 bis0,3 Gew.-%. Darüber hinaus können die Deckschichten auch Siloxane in einer Menge von 0,05 bis 1,0, vorzugsweise von 0,1 bis 0,5 Gew.-% enthalten, wobei Siloxan nur der Schicht zugefügt wird, welche anschließend nicht bedruckt werden soll.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate, und/oder vernetzte organische Polymerisate wie Polymethacrylate und Polysiloxane und dergleichen, bevorzugt werden Benzoguanaminformaldehyd-Polymere, Siliciumdioxid und Calciumcarbonat. Die mittlere Teilchengröße liegt zwischen 1 und 6 µm , insbesondere 2 und 5 µm , wobei Teilchen mit einer kugelförmigen Gestalt, wie in der EP-A-0 236 945 und der DE-A-38 01 535 beschrieben, besonders geeignet sind.

Die Erfindung betrifft weiterhin ein Verfahren zur Herstellung der erfindungsgemäßen Mehrschichtfolie nach dem an sich bekannten Coextrusionsverfahren.

Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend gegebenenfalls biaxial gestreckt (orientiert), die gegebenenfalls biaxial gestreckte Folie thermofixiert und an einer Seite, vorzugsweise an beiden Oberflächenschichten corona- oder flammbehandelt wird.

Die biaxiale Streckung (Orientierung) ist bevorzugt und kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, besonders günstig ist.

Zunächst wird wie beim Coextrusionsverfahren üblich das Polymere oder die Polymermischung der einzelnen Schichten in einem Extruder komprimiert und verflüssigt, wobei die gegebenenfalls zugesetzten Additive bereits im Polymer enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Vorzugsweise wird die so erhaltene Folie dann längs und quer zur Extrusionsrichtung gestreckt, was zu einer Orientierung der Molekülketten führt. In Längsrichtung wird vorzugsweise 4:1 bis 7:1 und in Querrichtung vorzugsweise 6:1 bis 11:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich ihre Thermofixierung (Wärmebehandlung) an, wobei die Folie etwa 0,5 bis 10 s lang bei einer Temperatur von 110 bis 150°C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie auch abgekühlt und verfestigt wird, bei einer Temperatur von 10 bis 90 °C zu halten, bevorzugt 20 bis 60 °C.

Darüber hinaus wird die Längsstreckung vorteilhafterweise bei einer Temperatur von weniger als 140°C, vorzugsweise im Bereich von 110 bis 125 °C und die Querstreckung bei einer Temperatur größer 140°C, vorzugsweise bei 145 bis 160°C, durchgeführt

Vorzugsweise werden wie oben erwähnt nach der biaxialen Streckung wird üblicherweise eine, vorzugsweise beide Oberfläche/n der Folie nach einer der bekannten Methoden corona- und/oder flammbehandelt.

Für die Coronabehandlung wird die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, wobei 38 bis 45 mN/m bevorzugt sind.

Die opake Mehrschichtfolie läßt sich erfindungsgemäß hervorragend für das In-Mould-Etikettierverfahren verwenden. Der fertig etikettierte Hohlkörper zeigt ein optisch brilliantes Erscheinungsbild ohne optische Störungen durch Orangenhaut oder Blasen. Die Folie läßt sich bei der erfindungsgemäßen Verwendung hervorragend verarbeiten und handhaben. Insbesondere kann die Folie nach dem Zuschneiden und Stapeln sehr gut und fehlerfrei mit hoher Geschwindigkeit vereinzelt werden. Sämtliche Maßnahmen zur Optimierung dieser Verwendung beeinträchtigen die übrigen wichtigen Eigenschaften wie Glanz und gute Bedruckbarkeit nicht nachteilig. Zusätzlich zeigt das zugeschnittene Etikett eine sehr geringe Rollenneigung, wodurch sich der Etikettenstapel sehr gut handhaben läßt.

Die Folie läßt sich erfindungsgemäß besonders vorteilhaft für die Etikettierung von Hohlkörpern oder Behältnissen aus Polyethylen verwenden.

Die Erfindung wird nunmehr durch die nachfolgenden Beispiele erläutert.

### Beispiel 1

Nach dem Coextrusionsverfahren wurde aus einer Breitschlitzdüse bei einer Extrusionstemperatur von 260 °C als Summe eine Dreischichtfolie mit einem Schichtaufbau ABA extrudiert, d. h. auf die Basisschicht B war auf beiden Seiten je eine Deckschicht A aufgebracht. Beide Deckschichten A wurden coronabehandelt.

Die wesentlichen Komponenten der Basisschicht B waren:
92,70 Gew.-% Propylenhomopolymerisat (PP) mit einem n-heptanlöslichen Anteil von 4,5 Gew.-% (bezogen auf 100 % PP) und einem Schmelzpunkt von 165 °C; der Schmelzflußindex des Propylenhomopolymeren liegt bei 3,2 g/10 min bei 230 °C und 21,6 N Belastung (DIN 53 735);
6,0 Gew.-% TiO₂ über Masterbatch ®P 8555 LM, Lieferant Firma Schulman GmbH, Hüttenstraße 211, D-54578 Kerpen;
0,10 Gew.-%N,N-bis(2-hydroxyethyl)-(C₁₀-C₂₀)-alkylamin (®Armostat 300)
0,25 Gew.-% Erucasäureamid
5 Gew.-% Calciumcarbonat mit einer mittleren Teilchengröße von 3 µm

Die Deckschichten A bestanden aus
50 Gew.-% eines statistischen Ethylen-Propylen-Copolymeren der Fa.Solvay (Eltex PKS 409), mit einem Ethylengehalt von 4,5Gew.-% und
0,1 Gew.-% Antiblockmittel (®Syloblock 45) sowie
0,1 Gew.-% Erucasäureamid.

Der Schmelzpunkt des Copolymeren lag bei 134 °C, wobei der Schmelzflußindex 7,0 g/10 min betrug.

Alle Schichten enthielten zur Stabilisierung 0,12 Gew.-% Pentaerythrity-Tetrakis-4-(3,5-ditertiärbutyl-4-hydroxyphenyl)-propionat (®Irganox 1010) sowie als Neutralisationsmittel 0,06 Gew.-% Calciumstearat.

Die extrudierte Dreischichtfolie wurde über die entsprechenden Verfahrensschritte nach der Coextrusion über eine erste Abzugswalze und ein weiteres Walzentrio abgezogen und abgekühlt, anschließend längsgestreckt, quergestreckt, fixiert und beidseitig coronabehandelt, wobei im einzelnen die folgenden Bedingungen gewählt wurden:

| | |
|---|---|
| Extrusion: | Extrusionstemperatur 260 °C |
| Längsstreckung: | Streckwalze T = 135 °C |
| Längsstreckung um den Faktor | 4,5 |
| Querstreckung: | Aufheizfelder T = 180 °C |
| Streckfelder | T = 177 °C |
| Querstreckung um den Faktor | 8 |
| Fixierung: | Temperatur T = 155 °C |
| Coronabehandlung: | Spannung: 10 000 V |
| | Frequenz: 10 000 Hz |

Die so hergestellte Mehrschichtfolie wies direkt nach der Herstellung auf beiden Seiten eine Oberflächenspannung von 40 bis 41 mN/m auf. Die Folie war ca. 90 µm dick, wobei die Dicke der Deckschichten je etwa 1,8 µm betrug. Die Folie wies eine Dichte von 0,72 g/cm³ auf.

Die Folie wurde bedruckt, auf die Etikettenform zugeschnitten und gestapelt. Die Etikettenstapel wurden wie üblich an der Blasformmaschine bereitgestellt und die Stapel wurden zur Entnahme der Etiketten vorbereitet. Die dafür notwendigen Geräte und Handgriffe sind im Stand der Technik bekannt und beispielsweise in Firmenschriften der Fa. Hoechst Trespaphan beschrieben.

Eine Blasformmaschine mit automatischer Etikettenzuführung wurde mit HD-PE Blasformware beschickt und unter den für HD-PE üblichen Verarbeitungsbedingungen gefahren.

Die Ergebnisse des Versuchs sind in der untenstehenden Tabelle beschrieben.

### Beispiel 2

Beispiel 1 wurde wiederholt, wobei die Basisschicht als Gleit- und Antistatik-Mittel

| | |
|---|---|
| 0,15 Gew.-% | Glycerin-monostearat |
| 0,05 Gew.-% | N,N-bis(2-hydroxyethyl)-(C₁₀-C₂₀)-alkylamin (®Armostat 300) |
| 0,05 Gew.-% | Erucasäureamid |

enthielt.

### Vergleichsbeispiel 3

Beispiel 1 wurde wiederholt, wobei die Dicke der Folie 80 µm betrug.

### Vergleichsbeispiel 4

Beispiel 1 wurde wiederholt, wobei die Dicke der Deckschichten 0,7 µm betrug.

### Vergleichsbeispiel 5

Beispiel 1 wurde wiederholt, wobei die Dichte der Folie 0,62 g/cm³ betrug.

### Vergleichsbeispiel 6

Beispiel 1 wurde wiederholt, wobei die Dichte der Folie 0,86 g/cm³ betrug.

### Vergleichsbeispiel 7

Beispiel 1 wurde wiederholt, wobei nur eine Außenseite der Folie Corona-behandelt wurde. Die behandelte Seite befand sich beim Einlegen in die Blasform auf der Außenseite

### Vergleichsbeispiel 8

Beispiel 1 wurde wiederholt, wobei die Dicke der Deckschicht auf der Außenseite 0,5 µm betrug.

Zur Charakterisierung der Rohstoffe und der Folien wurden die folgenden Meßmethoden benutzt:

### Schmelzflußindex

Der Schmelzflußindex wurde nach DIN 53 735 bei 21,6 N Belastung und 230 °C gemessen.

### Schmelzpunkte

DSC-Messung, Maxima der Schmelzkurve, Aufheizgeschwindigkeit 20 □ K/min.

### Dichte

Die Dichte wird nach DIN 53 479, Verfahren A, bestimmt.

### Bewertung der Handling-Eigenschaften:

Rollneigung: Ein Folienblatt vom Format DIN A4 wird je mit der Unter- und der Oberseite auf eine flache Unterlage gelegt. Nach Abklingen eventueller statischer Aufladung wird bewertet und ggf. gemessen, ob und inwieweit die Ränder der Folie sich von der Unterlage abheben. Bei einer Randhöhe von weniger als 1 mm gilt die Rollneigung als gut, bei bis zu 2 mm als mäßig.

Vereinzelbarkeit: Bewertet wird die Häufigkeit, mit der ein Handhabungsautomat bei der Beschickung einer Bogen-Off-set-Druckmaschine bzw. der Blasformmaschine mehr als ein Folienblatt vom Stapel entnimmt. Bei einer Fehlentnahmerate von unter 1 :10000 gilt die Entstapelbarkeit als gut, bei über 1 : 5000 als schlecht.

Formbeschickung: Bewertet wird die Fehlerrrate bei der Einlegung des Etiketts in die Blasform. Häufige Fehler sind Knickbildung, eingeschlagene Kanten und, bei elektrostatischer Fixierung, Fehlpositionierung durch Verschiebung in der Form. Bei einer Fehlerrate von unter 1 :10000 gilt die Beschickungsfähigkeit als gut, bei über 1 : 5000 als schlecht.

Haftung: Bewertet wird, (A) ob sich der Rand des Etiketts ohne Verwendung von Werkzeug vom Behältnis abheben läßt, (B) ob sich eine Folie, die am Rand vom Untergrund gelöst wurde, zerstörungsfrei abziehen läßt und (C) ob sich das Etikett nach Biegebeanspruchung mit einem Biegeradius von kleiner 3 cm von der Unterlage ablöst. Als schlecht gilt, wenn (A) der Rand sich stellenweise an mehr als 1 von 100 Hohlkörpern spontan löst, wenn (B) sich von mehr als 1 von 100 Hohlkörpern das am Rand gelöste Etikett unzerstört abziehen läßt oder wenn (C) sich das Etikett nach Biegebeanspruchung mit einem Biegeradius von kleiner 3 cm von der Unterlage ablöst.

Aussehen der etikettierten Flasche: Bewertet wird die Zahl und Größe von blasenförmigen Abhebungen, zudem werden die Blasen klassifiziert nach ihrer Art und Größe.

Orangenhaut: Das Aussehen einer etikettierten Flasche wird als gut eingestuft, wenn weniger als 30 Bläschen des Orangehauttyps auf dem Etikett mit einer Fläche von 100 cm² zu sehen sind, als mäßig, wenn mehr als 200 Bläschen zu sehen sind. Große Blasen: Das Aussehen einer etikettierten Flasche wird als gut eingestuft, wenn nicht mehr als 3 Blasen von nicht mehr als 3 mm Durchmesser und nicht mehr als 0,5 mm Höhe auf einer Etikettenfläche von 100 cm² zu sehen sind. Das Aussehen gilt als schlecht, wenn mehr als 15 kleinere Blasen von nicht mehr als 3 mm Durchmesser und nicht mehr als 0,5 mm Höhe bzw. eine Blase von mehr als 10 mm Durchmesser oder 2 mm Höhe zu sehen sind. Maßgebend sind die schlechtesten Flaschen.

In der nachstehenden Tabelle sind die Eigenschaften der In-Mould-etikettierten blasgeformten Flaschen der Beispiele zusammengefaßt.

| | Handling | Haftung | Aussehen |
|---|---|---|---|
| Beispiel 1 | gut | Gut | gut |
| Beispiel 2 | gut | Gut | gut |
| Vergleichs beispiel 3 | gut | in den anliegenden Partien gut | große pralle Blasen |
| Vergleichs beispiel 4 | gut | schlecht (löst sich am Rand, Biegetest schlecht) | Glanz mangelhaft |
| Vergleichs beispiel 5 | noch gut | gut | schlecht (Orangenhaut) |
| Vergleichs beispiel 6 | sehr gut | schlecht (löst sich am Rand, kann weitgehend unzerstört abgezogen werden) | schlecht (welliges Aussehen nach spontaner Ablösung vom Hohlkörper) |
| Vergleichs beispiel 7 | mäßig (Vereinzelung fehlerhaft) | gut | gut |
| Vergleichs beispiel 8 | schlecht (Rollneigung beim Drucken) | gut | gut |

## Patentansprüche

1. Verwendung einer opaken mehrschichtigen Polypropylenfolie als In-Mould - Etikett im Blasform-Verfahren, die eine Basisschicht und mindesten zwei Deckschichten aufweist, wobei die Basisschicht vakuoleninitierende Füllstoffe enthält, **dadurch gekennzeichnet, daß** die Folie insgesamt eine Dicke von mindestens 85µm aufweist und die Basisschicht eine Kombination aus tertiärem aliphatischen Amin und Fettsäureamid enthält und beide Deckschichten Antiblockmittel enthalten und die Dichte der Folie in einem Bereich von 0,65 bis 0,85 g/cm³ liegt und die Folie auf beiden Oberflächen Corona- oder Flamm-behandelt ist.

2. Verwendung nach Anspruch 1, **dadurch gekennzeichnet, daß** die Basisschicht aliphatisches Amin in einer Menge von 0,02 bis 0,3 Gew.-% und Fettsäureamid in einer Menge von 0,04 bis 0,4 Gew.-% enthält.

3. Verwendung nach Anspruch 1 und/oder 2, **dadurch gekennzeichnet, daß** die Dicke der Folie zwischen 87 und 120 µm und die Dicke der Deckschichten zwischen 0,5 und 5 µm beträgt.

4. Verwendung nach einem oder mehreren der Ansprüche 1 bis 3, **dadurch gekennzeichnet, daß** sich die Dicken der Deckschichten um weniger als 30 % unterscheiden.

5. Verwendung nach einem oder mehreren der Ansprüche 1 bis 4, **dadurch gekennzeichnet, daß** die Basisschicht Glycerinmonostearat enthält, vorzugsweise in einer Menge von 0,05 bis 0,4 Gew.-%.

6. Verwendung nach einem oder mehreren der Ansprüche 1 bis 5, **dadurch gekennzeichnet, daß** beide Deckschichten Fettsäureamid enthalten, vorzugsweise in einer Menge von 0,05 bis 0,3 Gew.-%.

7. Verwendung nach einem oder mehreren der Ansprüche 1 bis 6, **dadurch gekennzeichnet, daß** die opake Basisschicht vakuoleninitierende Füllstoffe in einer Menge von 1 bis 15 Gew.-%, und Pigmente in einer Menge von 1 bis 10 Gew.-%, enthält.

8. Verwendung nach einem oder mehreren der Ansprüche 1 bis 7, **dadurch gekennzeichnet, daß** das Antiblockmittel in einer Menge von 0,05 bis 2Gew.-% enthalten ist und einen mittleren Teilchendurchmesser von 1 bis 6µmaufweist.

9. Verwendung nach einem oder mehreren der Ansprüche 1 bis 8, **dadurch gekennzeichnet, daß** die Folie einen Schrumpf von < 4 % in beiden Richtungen hat.

10. Behältnis etikettiert nach einer Verwendung gemäß einer der Ansprüche 1 bis 8.

## Claims

1. Use of an opaque, multilayered polypropylene film as in-mold label in blow molding which has a base layer and at least two top layers, where the base layer contains vacuole-initiating fillers, **characterized in that** the film has an overall thickness of at least 85 µm, the base layer contains a combination of tertiary aliphatic amine and fatty acid amide, both top layers contain antiblocking agents, the density of the film is in the range from 0.65 to 0.85 g/cm³, and the film has been corona- or flame-treated on both surfaces.

2. Use according to claim 1, **characterized in that** the base layer contains aliphatic amine in an amount of from 0.02 to 0.3% by weight and fatty acid amide in an amount of from 0.04 to 0.4% by weight.

3. Use according to claim 1 and/or 2, **characterized in that** the thickness of the film is between 87 and 120 µm, and the thickness of the top layers is between 0.5 and 5 µm.

4. Use according to one or more of claims 1 to 3, **characterized in that** the thicknesses of the top layers differ by less than 30%.

5. Use according to one or more of claims 1 to 4, **characterized in that** the base layer contains glycerol monostearate, preferably in an amount of from 0.05 to 0.4% by weight.

6. Use according to one or more of claims 1 to 5, **characterized in that** both top layers contain fatty acid amide, preferably in an amount of from 0.05 to 0.3% by weight.

7. Use according to one or more of claims 1 to 6, **characterized in that** the opaque base layer comprises vacuole-initiating fillers in an amount of from 1 to 15% by weight and pigments in an amount of from 1 to 10% by weight.

8. Use according to one or more of claims 1 to 7, **characterized in that** the antiblocking agent is present in an amount of from 0.05 to 2% by weight and has a mean particle diameter of from 1 to 6 µm.

9. Use according to one or more of claims 1 to 8, **characterized in that** the film has a shrinkage of < 4% in both directions.

10. Container labeled in accordance with a use according to one of claims 1 to 8.

## Revendications

1. Utilisation d'un film de polypropylène opaque multicouches en tant qu'étiquette dans le moule dans le procédé de moulage par soufflage, qui présente une couche de base et au moins deux couches de surface, la couche de base contenant des matières de charge initiant des vacuoles, **caractérisée en ce que** le film présente en tout une épaisseur d'au moins 85 µm et la couche de base contient une combinaison d'amine aliphatique tertiaire et d'amide d'acide gras et les deux couches de surface contiennent un agent anti blocking et la densité du film se situe dans une plage de 0,65 à 0,85 g/cm³ et le fim est soumis sur les deux surfaces à un traitement corona ou à un traitement à la flamme.

2. Utilisation selon la revendication 1, **caractérisée en ce que** la couche de base contient de l'amine aliphatique dans une quantité de 0,02 à 0,3 % en poids et de l'amide d'acide gras dans une quantité de 0,04 à 0,4 % en poids.

3. Utilisation selon l'une et/ou l'autre des revendications 1 et 2, **caractérisée en ce que** l'épaisseur du film se situe entre 87 et 120 µm et l'épaisseur des couches de surface entre 0,5 et 5 µm.

4. Utilisation selon l'une ou plusieurs des revendications 1 à 3, **caractérisée en ce que** l'épaisseur des couches de surface diffère de moins de 30 %.

5. Utilisation selon l'une ou plusieurs des revendications 1 à 4, **caractérisée en ce que** la couche de base contient du monostéarate de glycérine, de préférence dans une quantité de 0,05 à 0,4 % en poids.

6. Utilisation selon l'une ou plusieurs des revendications 1 à 5 **caractérisée en ce que** les deux couches de base contiennent de l'amide d'acide gras, de préférence dans une quantité de 0,05 à 0,3 %.

7. Utilisation selon l'une ou plusieurs des revendications 1 à 6 **caractérisée en ce que** la couche de base opaque contient des matières de charge qui initient des vacuoles dans une quantité de 1 à 15 % et des pigments dans une quantité de 1 à 10 %.

8. Utilisation selon l'une ou plusieurs des revendications 1 à 7 **caractérisée en ce que** l'agent anti blocking est contenu dans une quantité de 0,05 à 2 % et présente un diamètre de particule moyen de 1 à 6 µm.

9. Utilisation selon l'une ou plusieurs des revendications 1 à 8 **caractérisée en ce que** le film rétrécit dans les deux sens de < 4%.

10. Contenant étiqueté d'après une utilisation selon l'une ou l'autre des revendications 1 à 8.
